# EUROPÄISCHE PATENTSCHRIFT

(11) **EP 2 808 826 B1**
(45) Veröffentlichungstag und Bekanntmachung des Hinweises auf die Patenterteilung: **09.09.2020**
(21) Anmeldenummer: 14000134.8
(22) Anmeldetag: 15.01.2014
(51) Int. Cl.: G06K 9/00

(54) **Verfahren und Vorrichtung zur Umfelderfassung und -überwachung von Fahrzeugen, insbesondere von Nutzfahrzeugen**
Method and device for environmental detection and monitoring of vehicles, in particular for commercial vehicles
Procédé et dispositif d'enregistrement et de surveillance de l'environnement de véhicules, notamment de véhicules utilitaires

(30) Priorität: 31.05.2013 DE 102013009217
(43) Veröffentlichungstag der Anmeldung: 03.12.2014
(73) Patentinhaber: MAN Truck & Bus SE, 80995 München (DE)
(72) Erfinder: Dörner, Karlheinz, 85757 Karlsfeld (DE); Zimmermann, Andreas, 80995 München (DE); Heyes, Daniel, 81247 München (DE); Britta, Michel, 81675 München (DE)
(74) Vertreter: Liebl, Thomas

(56) Entgegenhaltungen:
- EP-A1- 1 962 509
- EP-A2- 2 361 806
- US-A1- 2012 300 061
- Takehiko Ohno ET AL: "Gaze-based Interaction" In: "Gaze-based Interaction", 1. Januar 2008 (2008-01-01), XP055351014, ISBN: 978-3-540-75412-1 Seiten 181-193, DOI: 10.1007/978-3-540-75412-1_8, * das ganze Dokument *
- Dirk Heylen: "Ubiquitous Gaze: Using Gaze at the Interface" In: Aghajan et al.: "Human-Centric Interfaces for Ambient Intelligence", 1. Januar 2010 (2010-01-01), Academic Press, Burlington, Mass. [u.a.], XP055350995, ISBN: 978-0-12-374708-2 Seiten 49-70, DOI: 10.1016/B978-0-12-374708-2.00003-6, * das ganze Dokument *
- Andrew T. Duchowski: "Attentive User Interfaces (AUIs)" In: "Eye Tracking Methodology - Theory and Practice", 1. Januar 2007 (2007-01-01), Springer London, GB, XP055351478, ISBN: 978-1-84628-608-7 Seiten 282-283, * das ganze Dokument *
- DINGYUN ZHU ET AL: "Head or gaze?", COMPUTER-HUMAN INTERACTION, ACM, 2 PENN PLAZA, SUITE 701 NEW YORK NY 10121-0701 USA, 22. November 2010 (2010-11-22), Seiten 300-303, XP058208900, DOI: 10.1145/1952222.1952286 ISBN: 978-1-4503-0502-0

## Beschreibung

Die Erfindung umfasst ein Verfahren zur Umfelderfassung und -überwachung von Fahrzeugen, insbesondere von Nutzfahrzeugen, nach dem Oberbegriff des Anspruchs 1 sowie eine Vorrichtung zur Umfelderfassung und -überwachung von Fahrzeugen, insbesondere von Nutzfahrzeugen, nach dem Oberbegriff des Anspruchs 6.

Es ist allgemein bekannt, bei Fahrzeugen, insbesondere bei Nutzfahrzeugen, Überwachungskameras anzuordnen, mittels denen die Fahrzeugumgebung bildlich erfasst werden kann, wobei die erfassten Bilder bzw. ein ausgewählter Teil davon dann im Inneren des Fahrzeuges auf einem Bildschirm bzw. Monitor angezeigt werden. Damit wird dem Fahrer Gelegenheit gegeben, zum Beispiel bei geparktem Fahrzeug, die nähere Fahrzeugumgebung zu überwachen. Eine derartige Umfeldüberwachung dient zum Beispiel der Sicherheit auf Rastplätzen bei abgestelltem Fahrzeug. Zum anderen kann mit einer derartigen Umfeldüberwachung auch kontrolliert werden, ob sich das Fahrzeug Hindernissen annähert bzw. ob sich Hindernisse an ein Fahrzeug annähern. Dies kann zum Beispiel beim Einparken und Rangieren von Vorteil sein.

Derartige Vorrichtungen zur Umfelderfassung und Umfeldüberwachung weisen jedoch einen relativ hohen Energieverbrauch auf, insbesondere auch im Fahrzeugstillstand bei nicht laufendem Motor, was gegebenenfalls zu einer Beeinträchtigung weiterer, von einem fahrzeugeigenen Energiesystem gespeister Verbraucher führen kann.

Demgegenüber ist es Aufgabe der vorliegenden Erfindung, ein Verfahren und eine Vorrichtung zur Umfelderfassung und -überwachung von Fahrzeugen, insbesondere von Nutzfahrzeugen, zur Verfügung zu stellen, mittels dem bzw. mittels der ein hoher Bedienkomfort erzielt wird und gleichzeitig auch der Energieverbrauch reduziert werden kann.

Diese Aufgabe wird gelöst mit den Merkmalen der unabhängigen Patentansprüche. Vorteilhafte Ausgestaltungen hierzu sind jeweils Gegenstand der darauf rückbezogenen Unteransprüche.

Gemäß der Erfindung wird ein Verfahren zur Umfelderfassung und -überwachung von Fahrzeugen, insbesondere von Nutzfahrzeugen, mit wenigstens einer am Fahrzeug angeordneten Erfassungseinrichtung vorgeschlagen, mittels der eine Fahrzeugumgebung erfassbar ist. Ferner ist wenigstens eine im Fahrzeug angeordnete Anzeigevorrichtung vorgesehen, mittels der die von der wenigstens einen Erfassungseinrichtung erfasste Fahrzeugumgebung oder ein Teilbereich derselben in Abhängigkeit von wenigstens einem vordefinierten Anzeigeparameter zur Anzeige bringbar ist. Erfindungsgemäß ist vorgesehen, dass die Anzeigevorrichtung eine Vorrichtung zur Blickerfassung und/oder zur Gesichtserkennung aufweist, die so ausgebildet ist, dass diese einen für eine vorgegebene Zeitdauer auf die Anzeigevorrichtung, insbesondere auf einen Bildschirm der Anzeigevorrichtung, gerichteten Blick und/oder ein für eine vorgegebene Zeitdauer der Anzeigevorrichtung, insbesondere einem Bildschirm der Anzeigevorrichtung, zugewandtes Gesicht eines Betrachters, der auf die Anzeigevorrichtung, insbesondere auf einen Bildschirm der Anzeigevorrichtung, blickt, erkennt und darauf die sich in einem ausgeschalteten Zustand befindende Anzeigevorrichtung dergestalt aktiviert, dass mittels der Anzeigevorrichtung, insbesondere auf einem Bildschirm der Anzeigevorrichtung, die mittels der wenigstens einen Erfassungseinrichtung erfasste Fahrzeugumgebung (oder wenigstens ein Teilbereich derselben) zur Anzeige gebracht wird.

Mit einer derartigen erfindungsgemäßen Lösung wird somit erreicht, dass es für einen Benutzer des Systems ausreicht, dass dieser seinen Blick bzw. sein Gesicht für eine ausreichend lange, vorgegebene bzw. vordefinierte Zeit auf die Anzeigevorrichtung bzw. den Bildschirm richtet und sich dieser dann aktiviert. Weitergehende Betätigungen der Anzeigevorrichtung sind nicht erforderlich, was den Bedienkomfort für einen Benutzer des Systems wesentlich erhöht. Zudem wird mit dieser erfindungsgemäßen Lösung auf einfache Weise sichergestellt, dass die Anzeigevorrichtung bzw. der Bildschirm nur dann aktiviert ist, wenn der Benutzer bzw. Betrachter tatsächlich eine Umfeldinformation abrufen will. In allen anderen Situationen bleibt die Anzeigevorrichtung in energiesparender Weise ausgeschaltet. Eine derartige erfindungsgemäße Lösung ist insbesondere in Verbindung mit Nutzfahrzeugen, insbesondere Lastkraftwagen, von Vorteil, bei denen die Fahrerkabinen bzw. Führerhäuser dem Fahrer und/oder Beifahrer als Schlaf- und Arbeitsplatz dienen und somit die Umfelderfassung und -überwachung nicht dauerhaft vom Fahrer bzw. Benutzer des Systems benötigt wird.

Um sicherzustellen, dass nicht jeder zufällige Blick eines Fahrzeuginsassen von der Vorrichtung zur Blickerfassung und/oder Gesichtserkennung als Anschaltsignal für die Anzeigevorrichtung verstanden wird, empfiehlt es sich, die Zeitdauer, für die die Vorrichtung zur Blickerfassung und/oder zur Gesichtserkennung einen auf die Anzeigevorrichtung gerichteten Blick bzw. ein der Anzeigevorrichtung zugewandtes Gesicht erfasst, so vorzugeben, dass diese Zeitdauer nicht zu gering ist. Beispielsweise kann hier eine Zeitdauer von größer gleich 3 Sekunden, bevorzugt von größer gleich 5 Sekunden, vorgegeben sein, damit das System den Willen des Betrachters zuverlässig umsetzt. Desweiteren ist es von besonderem Vorteil, wenn die Anzeigevorrichtung nach einer vorgegebenen Zeitdauer, in der die Vorrichtung zur Blickerfassung und/oder zur Gesichtserkennung keinen auf die Anzeigevorrichtung gerichteten Blick und/oder kein für eine vorgegebene Zeitdauer der Anzeigevorrichtung zugewandtes Gesicht eines Betrachters mehr erfasst, abgeschaltet wird. Auch diese Zeitdauer kann wiederum entsprechend vorgegeben sein und zum Beispiel größer gleich 10 Sekunden betragen.

In diesem Zusammenhang ist es besonders vorteilhaft, dass die Anzeigevorrichtung mit einer Ausschalteinrichtung versehen ist, die die Anzeigevorrichtung nach einer vorgegebenen Zeitdauer, in der die Vorrichtung zur Blickerfassung und/oder zur Gesichtserkennung keinen auf die Anzeigevorrichtung gerichteten Blick und/oder kein für eine vorgegebene Zeitdauer der Anzeigevorrichtung zugewandtes Gesicht eines Betrachters erfasst, selbsttätig ausschaltet, und zwar insbesondere diese in einen Standby-Modus oder in einen Energiesparmodul versetzt.

Gemäß einer weiteren besonders bevorzugten Ausführungsform kann die Vorrichtung zur Blickerfassung und/oder zur Gesichtserkennung mit einer Aktivierungseinrichtung gekoppelt sein, mittels der die Vorrichtung zur Blickerfassung und/oder zur Gesichtserkennung von einem Benutzer aktivierbar ist. Alternativ dazu kann aber auch vorgesehen sein, dass die Vorrichtung zur Blickerfassung und/oder zur Gesichtserkennung bei einer Fahrt mit einer unterhalb einer vorgegebenen Geschwindigkeitsschwelle liegenden Geschwindigkeit oder bei Fahrzeugstillstand selbsttätig aktiviert wird. Mit einer derartigen erfindungsgemäßen Lösung kann somit einerseits vom Benutzer jeweils individuell entschieden, ob die Vorrichtung zur Blickerfassung und/oder zur Gesichtserkennung tatsächlich benötigt wird und dementsprechend auch aktiviert werden soll, so dass dann bei einer entsprechenden Deaktivierung der Vorrichtung zur Blickerfassung und/oder Gesichtserkennung beispielsweise die Anzeigevorrichtung im Dauerbetrieb läuft und die Fahrzeugumgebung anzeigt. Mit der selbsttätigen Aktivierung wird dagegen zum Beispiel sichergestellt, dass bei niedrigen Geschwindigkeiten, zum Beispiel beim Rangieren eines Fahrzeugs, oder bei einem Fahrzeugstillstand, zum Beispiel auf Rastplätzen, die Vorrichtung zur Blickerfassung und/oder zur Gesichtserkennung automatisch aktiviert wird, weil hier die Umfelderfassung und Umfeldüberwachung regelmäßig als Fahrerassistenzsystem dauerhaft zur Verfügung stehen soll.

Gemäß einer weiteren besonders bevorzugten Ausgestaltung der vorliegenden Erfindungsidee wird vorgeschlagen, dass die Vorrichtung zur Blickerfassung und/oder zur Gesichtserkennung so ausgebildet ist, dass eine Kopfbewegung des Betrachters von derselben erfasst und die Fahrzeugumgebung mittels der Anzeigevorrichtung, insbesondere auf einem Bildschirm der Anzeigevorrichtung, in Abhängigkeit von der erfassten Kopfbewegung dargestellt wird. Mit einem derartigen Kopf-Tracking wird somit eine weitere wesentliche Erhöhung des Bedienkomforts erzielt, weil der Benutzer des Systems hier zum Beispiel durch einfache Kopfbewegungen dann die Umfelderfassung und Umfeldüberwachung so steuern kann, wie dies gerade seinen Wünschen entspricht, ohne dass hierfür eine separate Bedienung der Anzeigeeinrichtung mittels manueller Handgriffe erforderlich ist.

Die wenigstens eine Umfelderfassungseinrichtung wird bevorzugt durch eine Kamera gebildet, mittels der ein Umgebungsbild aufgenommen wird, das auf einem Bildschirm der wenigstens einen Anzeigenvorrichtung zur Anzeige gebracht wird.

Die Vorrichtung zur Blickerfassung und/oder Gesichtserkennung kann zum Beispiel eine bildbasierte Gesichtserkennung einer Zielperson sein, bei der durch eine Kamera ein Blick bzw. ein Gesicht erfasst wird und mit vorrichtungsintern abgespeicherten Referenzdaten verglichen wird, um die zuvor beschriebenen Funktionsweisen zu realisieren.

Die Erfindung wird zudem hinsichtlich der Vorrichtung mit den Merkmalen des Patentanspruchs 6 gelöst. Die sich hieraus ergebenden Vorteile wurden bereits zuvor in Verbindung mit der erfindungsgemäßen Verfahrensführung ausführlich erläutert, so dass zur Vermeidung von Wiederholungen auf die zuvor gemachten Ausführungen verwiesen wird.

Das gleiche gilt analog für die auf die Vorrichtung rückbezogenen Unteransprüche sowie das mit dem unabhängigen Patentanspruch 10 beanspruchte Fahrzeug, das insbesondere ein Nutzfahrzeug ist.

Die Erfindung wird nachfolgend anhand einer Zeichnung näher erläutert.

Es zeigen:
- Fig. 1: schematisch eine Prinzipdarstellung eines Nutzfahrzeugs mit einer Umfelderfassungseinrichtung, und
- Fig. 2: schematisch und perspektivisch eine Innenansicht eines Führerhauses mit einer beispielhaften Ausführungsform einer erfindungsgemäßen Vorrichtung.

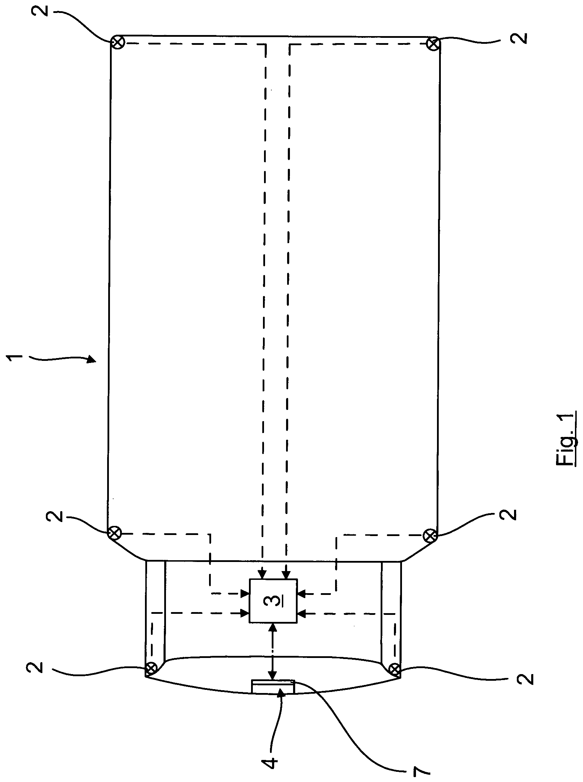

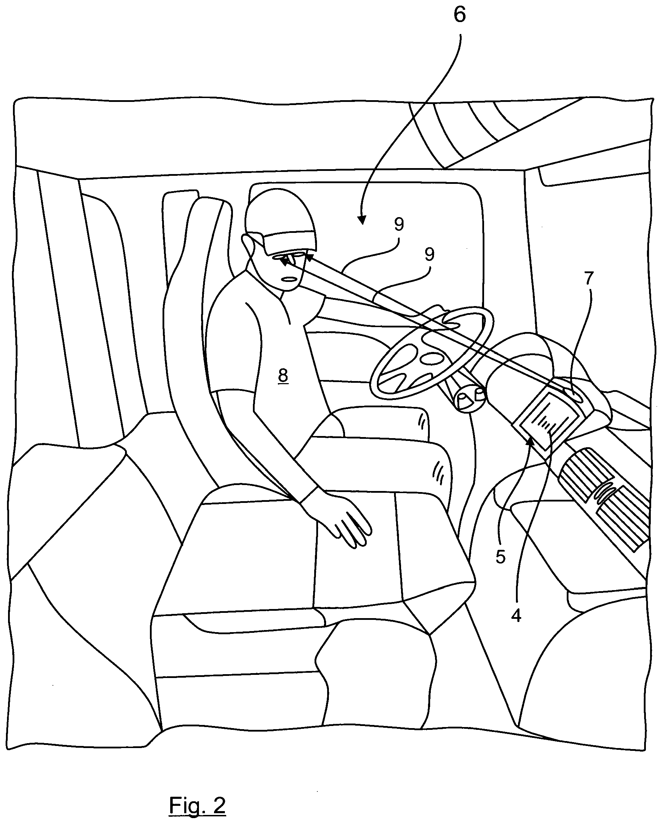

Fig. 1 zeigt eine schematische Prinzipdarstellung eines Nutzfahrzeugs in einer Draufsicht. An hier lediglich beispielhaft gewählten Punkten der Außenseite des Nutzfahrzeugs sind hier beispielhaft sechs Kameras 2 angeordnet, mittels denen ein Bild von der Fahrzeugumgebung aufnehmbar ist. Diese Bilddaten werden entsprechend der strichliert eingezeichneten Linien an eine Steuer- und/oder Regeleinrichtung 3 weitergeleitet, die eine hier nicht weiter dargestellte Auswerteeinrichtung ausbildet und/oder aufweist, mittels der ein definiertes Umgebungsbild (zum Beispiel auch lediglich ein definierter Ausschnitt eines aufgenommenen Umgebungsbildes) auf der Basis wenigstens eines vordefinierten Anzeigeparameters auf einem Bildschirm 4 einer Anzeigevorrichtung 5 zur Anzeige gebracht werden kann. Die Anzeigevorrichtung 5 mitsamt Bildschirm 4 ist hier im Inneren eines Führerhauses 6 des Nutzfahrzeugs 1 angeordnet, was in der Fig. 2, die eine schematische Innenansicht des Führerhauses 6 zeigt, nochmals beispielhaft dargestellt ist.

Wie dies der Fig. 2 entnommen werden kann, weist die Anzeigevorrichtung 5 neben dem Bildschirm 4 eine hier nachfolgend als Gesichtserkennungsvorrichtung 7 bezeichnete Vorrichtung zur Blickerfassung und/oder Gesichtserkennung auf.

Die Anzeigevorrichtung 5 bzw. der Bildschirm 4 ist in einer Grundstellung, zum Beispiel bei Fahrzeugstillstand, ausgeschaltet und befindet sich in einem Standby-Modus oder in einem Energiesparmodus. Erkennt nunmehr die Gesichtserkennungsvorrichtung 7, die zum Beispiel dauerhaft aktiviert sein kann, dass der Blick eines Fahrzeuginsassen 8, wie dies in der Fig. 2 durch die Pfeile 9 dargestellt ist, für eine vorgegebene Zeitdauer, zum Beispiel größer gleich 5 Sekunden, auf den Bildschirm 4 bzw. die Anzeigevorrichtung 5 gerichtet ist, gibt die Gesichtserkennungsvorrichtung 7 ein entsprechendes Signal an die Steuer- und/oder Regeleinrichtung 3 weiter, die daraufhin den Bildschirm 4 bzw. die Anzeigevorrichtung 5 dergestalt aktiviert, dass dort wenigstens ein Teilbereich der Fahrzeugumgebung, die mit den Kameras 2 aufgenommen wird, zur Anzeige gebracht wird.

Erkennt die Gesichtserkennungsvorrichtung 7, dass der Blick des Fahrers 8 für eine vorgegebene Zeitdauer, zum Beispiel für größer gleich 10 Sekunden, nicht auf die Anzeigevorrichtung 5 bzw. den Bildschirm 4 gerichtet ist, kann diese die Anzeigevorrichtung 5 bzw. den Bildschirm 4 wieder in den ausgeschalteten Modus zurücksetzen, und zwar in einen Standby-Modus oder in einen Energiesparmodus.

Die Gesichtserkennungsvorrichtung 7 kann des weiteren so ausgebildet sein, dass eine Kopfbewegung des Betrachters erfasst und die Fahrzeugumgebung mittels der Anzeigevorrichtung 5 bzw. dem Bildschirm 4 in Abhängigkeit von der erfassten Kopfbewegung dargestellt wird, zum Beispiel bei einer Kopfbewegung nach rechts das dargestellte Umgebungsbild ebenfalls nach rechts "wandert".

### Bezugszeichenliste

- 1: Nutzfahrzeug
- 2: Kamera
- 3: Steuer- und/oder Regeleinrichtung
- 4: Bildschirm
- 5: Anzeigevorrichtung
- 6: Führerhaus
- 7: Gesichtserkennungsvorrichtung
- 8: Fahrzeuginsasse
- 9: Pfeile

## Patentansprüche

1. Verfahren zur Umfelderfassung und -überwachung von Fahrzeugen, insbesondere von Nutzfahrzeugen, mit wenigstens einer am Fahrzeug (1) angeordneten Erfassungseinrichtung (2), mittels der eine Fahrzeugumgebung erfassbar ist, und mit wenigstens einer im Fahrzeug (1) angeordneten Anzeigevorrichtung (5), mittels der die von der wenigstens einen Erfassungseinrichtung (2) erfasste Fahrzeugumgebung oder ein Teilbereich derselben in Abhängigkeit von wenigstens einem vordefinierten Anzeigeparameter zur Anzeige bringbar ist, **dadurch gekennzeichnet, dass** die Anzeigevorrichtung (5) eine Vorrichtung (7) zur Blickerfassung und/oder zur Gesichtserkennung aufweist, die so ausgebildet ist, dass diese einen für eine vorgegebene Zeitdauer auf die Anzeigevorrichtung (5) gerichteten Blick und/oder ein für eine vorgegebene Zeitdauer der Anzeigevorrichtung (5) zugewandtes Gesicht eines Betrachters (8), der auf die Anzeigevorrichtung (5) blickt, erkennt und daraufhin die sich in einem ausgeschalteten Zustand befindende Anzeigevorrichtung (5) dergestalt aktiviert, dass mittels der Anzeigevorrichtung (5) wenigstens ein Teilbereich der mittels der wenigstens einen Erfassungseinrichtung (2) erfassten Fahrzeugumgebung zur Anzeige gebracht wird, und dass die Vorrichtung (7) zur Blickerfassung und/oder zur Gesichtserkennung so ausgebildet ist, dass eine Kopfbewegung des Betrachters erfasst und die Fahrzeugumgebung mittels der Anzeigevorrichtung (5) in Abhängigkeit von der erfassten Kopfbewegung dargestellt wird.

2. Verfahren nach Anspruch 1, **dadurch gekennzeichnet, dass** die Anzeigevorrichtung (5) nach einer vorgegebenen Zeitdauer, in der die Vorrichtung (7) zur Blickerfassung und/oder zur Gesichtserkennung keinen auf die Anzeigevorrichtung (5) gerichteten Blick und/oder kein für eine vorgegebene Zeitdauer der Anzeigevorrichtung (5) zugewandtes Gesicht eines Betrachters (8) erfasst, abgeschaltet wird.

3. Verfahren nach Anspruch 2, **dadurch gekennzeichnet, dass** die Anzeigevorrichtung (5) mit einer Ausschalteinrichtung versehen ist, die die Anzeigevorrichtung (5) nach einer vorgegebenen Zeitdauer, in der die Vorrichtung (7) zur Blickerfassung und/oder zur Gesichtserkennung keinen auf die Anzeigevorrichtung (5) gerichteten Blick und/oder kein für eine vorgegebene Zeitdauer der Anzeigevorrichtung (5) zugewandtes Gesicht eines Betrachters (8) erfasst, selbsttätig ausschaltet, insbesondere diese in einen Standby-Modus oder in einen Energiesparmodus versetzt.

4. Verfahren nach einem der vorhergehenden Ansprüche, **dadurch gekennzeichnet, dass** die Vorrichtung (7) zur Blickerfassung und/oder zur Gesichtserkennung mit einer Aktivierungseinrichtung gekoppelt ist, mittels der die Vorrichtung (7) zur Blickerfassung und/oder zur Gesichtserkennung von einem Benutzer aktivierbar ist oder mittels der die Vorrichtung (7) zur Blickerfassung und/oder zur Gesichtserkennung bei einer Fahrt mit einer unterhalb einer vorgegebenen Geschwindigkeitsschwelle liegenden Geschwindigkeit oder bei Fahrzeugstillstand selbsttätig aktiviert wird.

5. Verfahren nach einem der vorhergehenden Ansprüche, **dadurch gekennzeichnet, dass** die wenigstens eine Erfassungseinrichtung (2) durch eine Kamera gebildet ist, mittels der ein Umgebungsbild aufgenommen wird, das auf einem Bildschirm (4) der wenigstens einen Anzeigevorrichtung (5) zur Anzeige gebracht wird.

6. Vorrichtung zur Umfelderfassung und -überwachung von Fahrzeugen, insbesondere von Nutzfahrzeugen, zur Durchführung eines Verfahrens nach einem der vorhergehenden Ansprüche, mit wenigstens einer am Fahrzeug (1) angeordneten Erfassungseinrichtung (2), mittels der eine Fahrzeugumgebung erfassbar ist, und mit wenigstens einer im Fahrzeug (1) angeordneten Anzeigevorrichtung (5), mittels der die von der wenigstens einen Erfassungseinrichtung (2) erfasste Fahrzeugumgebung oder ein Teilbereich derselben in Abhängigkeit von wenigstens einem vordefinierten Anzeigeparameter zur Anzeige bringbar ist, **dadurch gekennzeichnet, dass** die Anzeigevorrichtung (5) eine Vorrichtung (7) zur Blickerfassung und/oder zur Gesichtserkennung aufweist, die so ausgebildet ist, dass diese einen für eine vorgegebene Zeitdauer auf die Anzeigevorrichtung (5) gerichteten Blick und/oder ein für eine vorgegebene Zeitdauer der Anzeigevorrichtung (5) zugewandtes Gesicht eines Betrachters (8), der auf die Anzeigevorrichtung (5) blickt, erkennt und daraufhin die sich in einem ausgeschalteten Zustand befindende Anzeigevorrichtung (5) dergestalt aktiviert, dass mittels der Anzeigevorrichtung (5) wenigstens eine Teilbereich der mittels der wenigstens einen Erfassungseinrichtung (2) erfassten Fahrzeugumgebung zur Anzeige bringbar ist, und dass die Vorrichtung (7) zur Blickerfassung und/oder zur Gesichtserkennung so ausgebildet ist, dass eine Kopfbewegung des Betrachters erfassbar ist und die Fahrzeugumgebung mittels der Anzeigevorrichtung (5), insbesondere auf einem Bildschirm (4) der Anzeigevorrichtung (5), in Abhängigkeit von der erfassten Kopfbewegung darstellbar ist.

7. Vorrichtung nach Anspruch 6, **dadurch gekennzeichnet, dass** die Anzeigevorrichtung mit einer Ausschalteinrichtung versehen ist, die so ausgebildet ist, dass diese die Anzeigevorrichtung (5) nach einer vorgegebenen Zeitdauer, in der die Vorrichtung (7) zur Blickerfassung und/oder zur Gesichtserkennung keinen auf die Anzeigevorrichtung (5) gerichteten Blick und/oder kein für eine vorgegebene Zeitdauer der Anzeigevorrichtung (5) zugewandtes Gesicht eines Betrachters (8) erfasst, selbsttätig ausschaltet, insbesondere diese in einen Standby-Modus oder in einen Energiesparmodus versetzt.

8. Vorrichtung nach Anspruch 6 oder 7, **dadurch gekennzeichnet, dass** die Vorrichtung (7) zur Blickerfassung und/oder zur Gesichtserkennung mit einer Aktivierungseinrichtung gekoppelt ist, mittels der die Vorrichtung (7) zur Blickerfassung und/oder zur Gesichtserkennung von einem Benutzer aktivierbar ist oder mittels der die Vorrichtung (7) zur Blickerfassung und/oder zur Gesichtserkennung bei einer Fahrt mit einer unterhalb einer vorgegebenen Geschwindigkeitsschwelle liegenden Geschwindigkeit oder bei Fahrzeugstillstand selbsttätig aktivierbar ist.

9. Vorrichtung nach einem der Ansprüche 6 bis 8, **dadurch gekennzeichnet, dass** die wenigstens eine Erfassungseinrichtung (2) durch eine Kamera gebildet ist, mittels der ein Umgebungsbild aufnehmbar ist, das auf einem Bildschirm (4) der wenigstens einen Anzeigevorrichtung (5) zur Anzeige bringbar ist.

10. Fahrzeug, insbesondere Nutzfahrzeug, mit einer Vorrichtung nach einem der Ansprüche 6 bis 9.

## Claims

1. Method for recording and monitoring the surroundings of vehicles, in particular of utility vehicles, having at least one recording apparatus (2) arranged on the vehicle (1) and by way of which it is possible to record vehicle surroundings, and having at least one display device (5) arranged in the vehicle (1) and by way of which the vehicle surroundings recorded by the at least one recording apparatus (2) or a portion thereof is able to be displayed depending on at least one predefined display parameter, **characterized in that** the display device (5) has a gaze recording and/or facial recognition device (7) that is designed such that it recognizes a gaze directed at the display device (5) for a predefined duration and/or a face, facing the display device (5) for a predefined duration, of an observer (8) who is looking at the display device (5) and then activates the display device (5), which is in a deactivated state, such that the display device (5) displays at least a portion of the vehicle surroundings recorded by way of the at least one recording apparatus (2), and that the gaze recording and/or facial recognition device (7) is designed such that a head movement of the observer is recorded and the vehicle surroundings are displayed by way of the display device (5) depending on the recorded head movement.

2. Method according to Claim 1, **characterized in that** the display device (5) is deactivated after a predefined duration during which the gaze recording and/or facial recognition device (7) does not record any gaze directed at the display device (5) and/or does not record a face, facing the display device (5) for a predefined duration, of an observer (8).

3. Method according to Claim 2, **characterized in that** the display device (5) is provided with a deactivation apparatus that automatically deactivates the display device (5) after a predefined duration during which the gaze recording and/or facial recognition device (7) does not record any gaze directed at the display device (5) and/or does not record a face, facing the display device (5) for a predefined duration, of an observer (8), in particular puts it into a standby mode or into an energy-saving mode.

4. Method according to one of the preceding claims, **characterized in that** the gaze recording and/or facial recognition device (7) is coupled to an activation apparatus by way of which the gaze recording and/or facial recognition device (7) is able to be activated by a user or by way of which the gaze recording and/or facial recognition device (7) is activated automatically in the event of travel at a speed below a predefined speed threshold or at vehicle standstill.

5. Method according to one of the preceding claims, **characterized in that** the at least one recording apparatus (2) is formed by a camera by way of which an image of the surroundings is recorded and is displayed on a screen (4) of the at least one display device (5).

6. Device for recording and monitoring the surroundings of vehicles, in particular of utility vehicles, for performing a method according to one of the preceding claims, having at least one recording apparatus (2) arranged on the vehicle (1) and by way of which it is possible to record vehicle surroundings, and having at least one display device (5) arranged in the vehicle (1) and by way of which the vehicle surroundings recorded by the at least one recording apparatus (2) or a portion thereof is able to be displayed depending on at least one predefined display parameter, **characterized in that** the display device (5) has a gaze recording and/or facial recognition device (7) that is designed such that it recognizes a gaze directed at the display device (5) for a predefined duration and/or a face, facing the display device (5) for a predefined duration, of an observer (8) who is looking at the display device (5) and then activates the display device (5), which is in a deactivated state, such that the display device (5) is able to display at least a portion of the vehicle surroundings recorded by way of the at least one recording apparatus (2), and that the gaze recording and/or facial recognition device (7) is designed such that a head movement of the observer is able to be recorded and the vehicle surroundings are able to be displayed by way of the display device (5), in particular on a screen (4) of the display device (5), depending on the recorded head movement.

7. Device according to Claim 6, **characterized in that** the display device is provided with a deactivation apparatus that is designed such that it automatically deactivates the display device (5) after a predefined duration during which the gaze recording and/or facial recognition device (7) does not record any gaze directed at the display device (5) and/or does not record a face, facing the display device (5) for a predefined duration, of an observer (8), in particular puts it into a standby mode or into an energy-saving mode.

8. Device according to Claim 6 or 7, **characterized in that** the gaze recording and/or facial recognition device (7) is coupled to an activation apparatus by way of which the gaze recording and/or facial recognition device (7) is able to be activated by a user or by way of which the gaze recording and/or facial recognition device (7) is able to be activated automatically in the event of travel at a speed below a predefined speed threshold or at vehicle standstill.

9. Device according to one of Claims 6 to 8, **characterized in that** the at least one recording apparatus (2) is formed by a camera by way of which an image of the surroundings is able to be recorded and is able to be displayed on a screen (4) of the at least one display device (5).

10. Vehicle, in particular utility vehicle, having a device according to one of Claims 6 to 9.

## Revendications

1. Procédé de détection et de surveillance de l'environnement de véhicules, notamment de véhicules utilitaires, comprenant au moins un dispositif de détection (2) disposé sur le véhicule (1), au moyen duquel peut être détecté un environnement de véhicule, et comprenant au moins un arrangement d'affichage (5) disposé dans le véhicule (1), au moyen duquel peut être amené à être affiché l'environnement de véhicule détecté au moyen de l'au moins un dispositif de détection (2) ou une partie de celui-ci en fonction d'au moins un paramètre d'affichage prédéfini, **caractérisé en ce que** l'arrangement d'affichage (5) possède un arrangement (7) de détection du regard et/ou de reconnaissance de visage qui est configuré de telle sorte que celui-ci reconnaît un regard dirigé sur l'arrangement d'affichage (5) pendant une durée prédéfinie et/ou un visage d'un observateur (8), qui regarde l'arrangement d'affichage (5), faisant face à l'arrangement d'affichage (5) pendant une durée prédéfinie et, là-dessus, active l'arrangement d'affichage (5) qui se trouve dans un état hors circuit de telle sorte qu'au moins une zone partielle de l'environnement de véhicule détecté au moyen de l'au moins un dispositif de détection (2) est amenée à être affichée au moyen de l'arrangement d'affichage (5), et **en ce que** l'arrangement (7) de détection du regard et/ou de reconnaissance de visage est configuré de telle sorte qu'un mouvement de la tête de l'observateur est détecté et l'environnement de véhicule est représenté au moyen de l'arrangement d'affichage (5) en fonction du mouvement de tête détecté.

2. Procédé selon la revendication 1, **caractérisé en ce que** l'arrangement d'affichage (5) est mis hors circuit après une durée prédéfinie dans laquelle l'arrangement (7) de détection du regard et/ou de reconnaissance de visage ne détecte aucun regard dirigé sur l'arrangement d'affichage (5) et/ou aucun visage d'un observateur (8) faisant face à l'arrangement d'affichage (5) pendant une durée prédéfinie.

3. Procédé selon la revendication 2, **caractérisé en ce que** l'arrangement d'affichage (5) est pourvu d'un dispositif de mise hors circuit qui met automatiquement l'arrangement d'affichage (5) hors circuit après une durée prédéfinie, dans laquelle l'arrangement (7) de détection du regard et/ou de reconnaissance de visage ne détecte aucun regard dirigé sur l'arrangement d'affichage (5) et/ou aucun visage d'un observateur (8) faisant face à l'arrangement d'affichage (5) pendant une durée prédéfinie, le met notamment dans un mode de veille ou dans un mode d'économie d'énergie.

4. Procédé selon l'une des revendications précédentes, **caractérisé en ce que** l'arrangement (7) de détection du regard et/ou de reconnaissance de visage est couplé à un dispositif d'activation au moyen duquel l'arrangement (7) de détection du regard et/ou de reconnaissance de visage peut être activé par un utilisateur ou au moyen duquel l'arrangement (7) de détection du regard et/ou de reconnaissance de visage est activé automatiquement lors d'un déplacement à une vitesse inférieure à un seuil de vitesse prédéfini ou à l'arrêt du véhicule.

5. Procédé selon l'une des revendications précédentes, **caractérisé en ce que** l'au moins un dispositif de détection (2) est formé par une caméra au moyen de laquelle est capturée une image de l'environnement, laquelle est amenée à être affichée sur un écran (4) de l'au moins un arrangement d'affichage (5).

6. Arrangement de détection et de surveillance de l'environnement de véhicules, notamment de véhicules utilitaires, destiné à mettre en œuvre le procédé selon l'une des revendications précédentes, comprenant au moins un dispositif de détection (2) disposé sur le véhicule (1), au moyen duquel peut être détecté un environnement de véhicule, et comprenant au moins un arrangement d'affichage (5) disposé dans le véhicule (1), au moyen duquel peut être amené à être affiché l'environnement de véhicule détecté au moyen de l'au moins un dispositif de détection (2) ou une partie de celui-ci en fonction d'au moins un paramètre d'affichage prédéfini, **caractérisé en ce que** l'arrangement d'affichage (5) possède un arrangement (7) de détection du regard et/ou de reconnaissance de visage qui est configuré de telle sorte que celui-ci reconnaît un regard dirigé sur l'arrangement d'affichage (5) pendant une durée prédéfinie et/ou un visage d'un observateur (8), qui regarde l'arrangement d'affichage (5), faisant face à l'arrangement d'affichage (5) pendant une durée prédéfinie et, là-dessus, active l'arrangement d'affichage (5) qui se trouve dans un état hors circuit de telle sorte qu'au moins une zone partielle de l'environnement de véhicule détecté au moyen de l'au moins un dispositif de détection (2) peut être amenée à être affichée au moyen de l'arrangement d'affichage (5), et **en ce que** l'arrangement (7) de détection du regard et/ou de reconnaissance de visage est configuré de telle sorte qu'un mouvement de la tête de l'observateur peut être détecté et l'environnement de véhicule peut être représenté au moyen de l'arrangement d'affichage (5), notamment sur un écran (4) de l'arrangement d'affichage (5), en fonction du mouvement de tête détecté.

7. Arrangement selon la revendication 6, **caractérisé en ce que** l'arrangement d'affichage est pourvu d'un dispositif de mise hors circuit qui est configuré de telle sorte que celui-ci met automatiquement l'arrangement d'affichage (5) hors circuit après une durée prédéfinie, dans laquelle l'arrangement (7) de détection du regard et/ou de reconnaissance de visage ne détecte aucun regard dirigé sur l'arrangement d'affichage (5) et/ou aucun visage d'un observateur (8) faisant face à l'arrangement d'affichage (5) pendant une durée prédéfinie, le met notamment dans un mode de veille ou dans un mode d'économie d'énergie.

8. Arrangement selon la revendication 6 ou 7, **caractérisé en ce que** l'arrangement (7) de détection du regard et/ou de reconnaissance de visage est couplé à un dispositif d'activation au moyen duquel l'arrangement (7) de détection du regard et/ou de reconnaissance de visage peut être activé par un utilisateur ou au moyen duquel l'arrangement (7) de détection du regard et/ou de reconnaissance de visage peut être activé automatiquement lors d'un déplacement à une vitesse inférieure à un seuil de vitesse prédéfini ou à l'arrêt du véhicule.

9. Arrangement selon l'une des revendications 6 à 8, **caractérisé en ce que** l'au moins un dispositif de détection (2) est formé par une caméra au moyen de laquelle peut être capturée une image de l'environnement, laquelle peut être amenée à être affichée sur un écran (4) de l'au moins un arrangement d'affichage (5).

10. Véhicule, notamment véhicule utilitaire, comprenant un arrangement selon l'une des revendications 6 à 9.
